# FASCICULE DE BREVET EUROPEEN

(11) **EP 3 432 611 B1**
(45) Date de publication et mention de la délivrance du brevet: **22.01.2020**
(21) Numéro de dépôt: 18183871.5
(22) Date de dépôt: 17.07.2018
(51) Int. Cl.: H04W 4/029, H04M 1/00, H04W 4/80, H04M 1/725, G06F 1/16, H04W 4/02

(54) **SYSTÈME DE LOCALISATION D'UNE PERSONNE PAR VOIE DE TÉLÉCOMMUNICATION**
LOKALISIERUNGSSYSTEM EINER PERSON ÜBER TELEKOMMUNIKATION
SYSTEM FOR LOCATING A PERSON BY TELECOMMUNICATION MEANS

(30) Priorité: 21.07.2017 FR 1756922
(43) Date de publication de la demande: 23.01.2019
(73) Titulaire: Beaugé, Jacques, 37400 Amboise (FR)
(72) Inventeur: Beaugé, Jacques, 37400 Amboise (FR)
(74) Mandataire: Gicquel, Frédéric

(56) Documents cités:
- EP-A1- 2 703 939
- US-A1- 2009 273 452
- US-A1- 2016 203 471
- DATABASE EPODOC EUROPEAN PATENT OFFICE, THE HAGUE, NL; 10 juin 2015 (2015-06-10), XP002778467, -& CN 104 700 567 A (DALIAN HONGQI TECHNOLOGY DEV CO LTD) 10 juin 2015 (2015-06-10)
- DATABASE EPODOC [Online] EUROPEAN PATENT OFFICE, THE HAGUE, NL; 9 décembre 2015 (2015-12-09), XP002784298, -& CN 204 859 245 U (DONGGUAN HONGLUO MOLD PLASTIC PRODUCTS CO LTD) 9 décembre 2015 (2015-12-09)

## Description

Le domaine de l'invention est celui de la conception et de la fabrication des équipements de téléphonie mobiles. Plus précisément, l'invention concerne des équipements mobiles permettant à une première personne de localiser une deuxième personne par voie de télécommunication.

Actuellement, le taux d'équipement des personnes physiques en téléphonie mobiles est considérable. Ainsi, la plupart des personnes, en tout cas dans les pays industrialisés, sont équipés d'un voire de plusieurs téléphones mobiles.

De ce fait, lorsque les personnes sont séparées l'une de l'autre, il est d'une grande simplicité, pour rejoindre l'autre personne, de l'appeler sur son téléphone mobile afin de définir un lieu pour se rejoindre.

Ainsi, lorsque deux personnes arrivent ensemble dans un lieu relativement étendu, le lieu étant éventuellement fréquenté par beaucoup d'autres personnes, il est possible que les deux personnes se perdent de vue, voire décident de se séparer temporairement en vue de se retrouver ultérieurement. Aussi, comme indiqué précédemment, en cas de difficulté pour se retrouver, il est aisé pour les deux personnes de s'appeler et de définir un lieu pour se retrouver.

Bien entendu, cette possibilité disparait si l'une des deux personnes n'a pas pris son téléphone mobile avec elle. Une seule des deux personnes est alors pourvue d'un téléphone mobile. Au mieux, si les deux personnes se séparent, la personne non équipée de son téléphone mobile devra emprunter un téléphone à une tierce personne pour pouvoir se localiser auprès de l'autre personne. Dans le cas le plus fréquent, les deux personnes devront errer pendant quelques temps avant de se retrouver.

Le document de brevet CN104 700 567 A fait partie de l'état de l'art pertinent. L'invention a notamment pour objectif de pallier cet inconvénient de l'art antérieur.

Plus précisément, l'invention a pour objectif de proposer une solution de localisation d'une personne par voie de télécommunication, conçue pour au moins deux personnes dont l'une seulement est équipée d'un téléphone mobile.

Cet objectif, ainsi que d'autre qui apparaitront par la suite sont atteints grâce à l'invention qui a pour objet un système de localisation d'une personne par voie de télécommunication selon la revendication indépendante 1.

Ainsi, grâce à l'invention, lorsque deux personnes arrivent ensemble sur un site, l'une des deux personnes ayant oublié son téléphone mobile tandis que l'autre est équipé de son téléphone mobile associé à la carte électronique du système de localisation selon l'invention, la personne équipée remet à la personne non équipée la carte électronique. En cas de besoin, la personne pourvue du téléphone mobile pourra ultérieurement localiser la carte électronique détenue par la deuxième personne, et donc localiser la deuxième personne elle-même pour la rejoindre.

L'invention connaît une application particulièrement avantageuse, s'agissant de la localisation des enfants. Il suffit donc de leur remettre la carte électronique pour leur assurer de les retrouver en toutes circonstances ou quasiment.

Par ailleurs, l'intégration de la batterie électrique rechargeable à la carte électronique, permet d'assurer une autonomie satisfaisante de la carte électronique, y compris en cas d'utilisations répétées.

Dans ce cas, les moyens de couplage électrique destinés à coupler l'ordiphone et la batterie électrique rechargeable assurent qu'à chaque fois que la carte électronique est à nouveau accouplée avec le téléphone mobile, il est possible de procéder à un rechargement électrique de la carte électronique.

Enfin, les moyens d'accouplement mécanique de l'ordiphone et de la carte électronique limitent les risques de séparer par inadvertance le téléphone mobile du système et la carte électronique. Une telle séparation (prenant par exemple la forme d'une perte de la carte électronique) peut alors empêcher de disposer de la carte électronique en cas de besoin.

Selon l'invention, la carte électronique est intégrée à un téléphone miniaturisé.

De cette façon, il est possible aux deux personnes de communiquer oralement et, par conséquent, de se situer mutuellement.

Il est à noter que, selon ce mode de réalisation, le téléphone miniaturisé peut nécessiter la mise en oeuvre d'une carte SIM (de l'anglais « Subscriber Identity Module »).

D'autres caractéristiques et avantages de l'invention apparaîtront plus clairement à la lecture de la description suivante d'un mode de réalisation préférentielle de l'invention, et de plusieurs variantes de réalisation, donnés à titre de simples exemples illustratifs et non limitatifs, et des dessins annexés parmi lesquels :

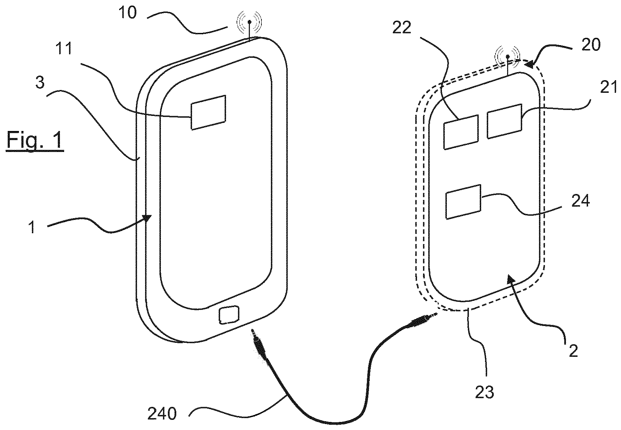

- la figure 1 est une illustration schématique d'un système de localisation d'une personne par voie de télécommunication selon l'invention ;

Pour référence à la figure 1, un système de localisation d'une personne par voie de télécommunication comprend :
- un ordiphone 1, destiné à être détenu par une première personne, cet ordiphone 1 étant classiquement pourvu de premiers moyens de communication 10 ;
- une carte électronique 2 (ou plusieurs cartes électroniques du même type) apte à être couplée à l'ordiphone 1 telle que décrit par la suite, et destinée à être remise par la première personne détenant l'ordiphone 1 à une deuxième personne non équipée d'un ordiphone.

La carte électronique inclut quant à elle :
- des deuxièmes moyens de communication 20, sans fil et aptes à communiquer avec les premiers moyens de communication 10 de l'ordiphone ;
- un code numérique d'identification 21 ;
- des moyens de géolocalisation 22.

Selon l'invention, le système met en oeuvre une application informatique 11 destinée à être chargée par l'ordiphone et susceptible d'être activée par le détenteur de l'ordiphone tel que décrit par la suite.

L'application informatique 11 chargée sur l'ordiphone est programmée pour mémoriser le code numérique d'identification de la carte électronique. De plus, l'application informatique est paramétrée pour ouvrir un canal de communication entre l'ordiphone 1 et la carte électronique 2, une fois l'application informatique activée, de telle sorte à collecter des données de géolocalisation fournies par les moyens de géolocalisation 22 de la carte électronique et rendre ces données de géolocalisation consultables par l'intermédiaire de l'ordiphone, et en particulier par l'intermédiaire de l'écran de l'ordiphone.

Un système tel que décrit précédemment peut être utilisé de la façon suivante : lorsque deux personnes arrivent ensemble sur un site, l'une d'entre elle étant équipée de l'ordiphone couplé à la carte électronique selon l'invention, tandis que la deuxième personne est à priori dépourvue d'un ordiphone, la première personne peut séparer la carte électronique de son ordiphone et la remettre à la deuxième personne.

Si besoin, c'est-à-dire, par exemple dans la situation selon laquelle les deux personnes sont distantes l'une de l'autre et se sont perdues de vue, la personne équipée de l'ordiphone peut activer l'application informatique dédiée au système selon l'invention. Cette application ouvre alors un canal de communication entre l'ordiphone et la carte électronique, ce canal de communication pouvant être public ou privé. La carte électronique émet, par l'intermédiaire de ces deuxièmes moyens de communication sans fil, des données de géolocalisation qui sont transmises à l'ordiphone via le canal de communication ouvert par l'application. La personne pourvue de l'ordiphone peut alors consulter les données de géolocalisation, par exemple en les affichant sur l'écran de l'ordiphone, et ainsi rejoindre la deuxième personne.

Selon un mode de réalisation particulier, la carte électronique 2 est intégrée à un téléphone miniature 23.

Par ailleurs, la carte électronique 2 intègre une batterie électrique rechargeable 24, des moyens de couplage électriques 240 étant prévus pour coupler électriquement l'ordiphone et la batterie électrique rechargeable. Ces moyens de couplage électrique 240 peuvent être constitués par un simple cordon électrique, ou par un système mâle/femelle de l'ordiphone et de la carte électronique s'emboitant directement pour assurer une liaison électrique lors du couplage mécanique de la carte électronique avec l'ordiphone.

On note que le couplage électrique de l'ordiphone et la carte électronique peuvent en outre être conçus de façon à permettre l'échange de données numériques entre l'ordiphone et la carte électronique. Il est ainsi envisageable que, lors de la première utilisation, le couplage électrique et numérique de l'ordiphone et de la carte électronique permettent à l'application informatique dédiée au système de récupérer le code d'identification numérique de la carte électronique.

Selon une autre caractéristique de l'invention, des moyens d'accouplement mécanique sont mis en oeuvre pour maintenir ensemble l'ordiphone et la carte électronique. Ces moyens de couplage mécanique peuvent être constitués notamment :
- d'une simple pince mécaniquement déformable (non représentée) ;
- d'une coque 3 dimensionnée de façon à permettre le logement de la carte électronique entre l'ordiphone et la coque (un tel logement pouvant être prévu directement sur le l'ordiphone lui-même).

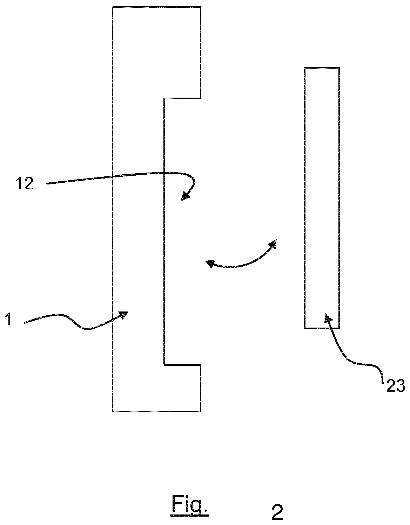

En référence à la figure 2, qui illustre le mode de réalisation particulier selon lequel la carte électronique 2 est intégrée à un téléphone miniature 23, le téléphone miniature 23 est destiné à être intégré dans l'ordiphone 1. A cet effet, l'ordiphone 1 comprend un logement 12 à l'intérieur duquel vient se loger le téléphone miniature 23.

Le logement 12 porte avantageusement :
- les moyens de couplage électrique 240 destinés à coupler l'ordiphone 1 et la batterie électrique rechargeable 24 de la carte électronique 2 intégrée au téléphone miniaturisé 23 ;
- des moyens d'accouplement mécanique de l'ordiphone et de la carte électronique, ou plus largement de l'ordiphone 1 avec le téléphone miniaturisé 23.

En utilisation, il est possible de sortir le téléphone miniaturisé 23 hors du logement 12 de l'ordiphone 1 pour obtenir un téléphone de secours par exemple.

Cela est notamment pratique lorsque deux personnes doivent se séparer mais que l'une des deux personnes n'a pas de téléphone ou que son téléphone est momentanément inutilisable.

Le logement 12 du téléphone peut avantageusement être refermé par une coque (non illustrée couvrant alors le téléphone miniaturisé 23 lorsque ce dernier est dans le logement. En variante le téléphone miniaturisé peut compléter la face arrière de l'ordiphone 1 de sorte que lorsqu'il est séparé de l'ordiphone 1, il laisse le logement 12 libre d'accès. Cela peut notamment servir de moyen visuel de la présence ou non du téléphone miniaturisé.

## Revendications

1. Système de localisation d'une personne par voie de télécommunication, ledit système comprenant un ordiphone (1) destiné à être détenu par une première personne et incluant des premiers moyens de communication (10), le système comprenant :
- au moins une carte électronique (2) apte à être couplée à l'ordiphone (1), et séparable de l'ordiphone en vue d'être remise à une deuxième personne, la carte électronique incluant :
- des deuxièmes moyens de communication (20) sans fil, aptes à communiquer avec les premiers moyens de communication (10) ;
- des moyens de géolocalisation (22) ;
- un code numérique d'identification (21) ;
- au moins une application informatique (11) destinée à être chargée par l'ordiphone (1) et programmable pour mémoriser le code numérique d'identification (21) de la carte électronique (2), ladite application informatique (11) étant paramétrée pour ouvrir un canal de communication entre l'ordiphone (1) et la carte électronique (2), collecter des données de géolocalisation fournies par les moyens de géolocalisation (22) de la carte électronique (2) et rendre lesdites données de géolocalisation consultables par l'ordiphone (1)
**caractérisé en ce que** la carte électronique (2) intègre une batterie électrique rechargeable (24), et **en ce que** l'ordiphone comprend un logement portant :
- des moyens de couplage électrique (240) destinés à coupler l'ordiphone (1) et la batterie électrique rechargeable (24);
- des moyens d'accouplement mécanique de l'ordiphone et de la carte électronique et **en ce que** le système comprend un téléphone miniaturisé (23) intégrant la carte électronique (2), le téléphone miniaturisé étant adapté à se loger dans le logement (12) de l'ordiphone (1).

## Patentansprüche

1. System zum Orten einer Person mittels Telekommunikation, wobei das System ein Smartphone (1) umfasst, das dazu bestimmt ist, von einer ersten Person mitgeführt zu werden, und das erste Kommunikationsmittel (10) einschließt, wobei das System umfasst:
- mindestens eine elektronische Karte (2), die in der Lage ist, mit dem Smartphone (1) gekoppelt zu werden, und die vom Smartphone getrennt werden kann, um einer zweiten Person übergeben zu werden, wobei die elektronische Karte einschließt:
-- zweite drahtlose Kommunikationsmittel (20), die in der Lage sind, mit den ersten Kommunikationsmitteln (10) zu kommunizieren;
-- Geo-Ortungsmittel (22);
-- einen digitalen Identifikationscode (21);
- mindestens eine IT-Anwendung (11), die dazu bestimmt ist, vom Smartphone (1) geladen zu werden, und die dafür programmiert werden kann, den digitalen Identifikationscode (21) der elektronischen Karte (2) zu speichern, wobei die IT-Anwendung (11) dafür parametriert ist, einen Kommunikationskanal zwischen dem Smartphone (1) und der elektronischen Karte (2) zu öffnen, Geo-Ortungsdaten, die von den Geo-Ortungsmitteln (22) der elektronischen Karte (2) geliefert werden, zu sammeln und die Geo-Ortungsdaten für das Smartphone (1) einsehbar zu machen,
**dadurch gekennzeichnet, dass** die elektronische Karte (2) eine wiederaufladbare elektrische Batterie (24) beinhaltet, und dadurch, dass das Smartphone eine Aufnahme umfasst, die in sich trägt:
- elektrische Kopplungsmittel (240), die dazu bestimmt sind, das Smartphone (1) und die wiederaufladbare elektrische Batterie (24) zu koppeln;
- Mittel zur mechanischen Kopplung des Smartphones und der elektronischen Karte,
und dadurch, dass das System ein miniaturisiertes Telefon (23) umfasst, das die elektronische Karte (2) beinhaltet, wobei das miniaturisierte Telefon dazu geeignet ist, in der Aufnahme (12) des Smartphones (1) aufgenommen zu werden.

## Claims

1. System for locating a person by means of telecommunications, said system comprising a smartphone (1) intended to be held by a first person and including first means of communication (10), the system comprising:
- at least one electronic card (2) able to be coupled to the smartphone (1), and able to be separated from the smartphone so as to be remitted to a second person, with the electronic card including:
- second means of wireless communication (20), able to communicate with the first means of communication (10);
- means of geolocation (22):
- a numerical identification code (21);
- at least one computer application (11) intended to be loaded by the smartphone (1) and able to be programmed in order to memorise the numerical identification code (21) of the electronic card (2), said computer application (11) being configured to open a communication channel between the smartphone (1) and the electronic card (2), collect geolocation data supplied by the means of geolocation (22) of the electronic card (2) and make said geolocation data able to be consulted by the smartphone (1) **characterised in that** the electronic card (2) integrates a rechargeable electric battery (24), and **in that** the smartphone comprises a housing carrying:
- means of electrical coupling (240) intended to couple the smartphone (1) and the rechargeable electric battery (24);
- means for mechanically coupling the smartphone and the electronic card
and **in that** the system comprises a miniaturised telephone (23) integrating the electronic card (2), the miniaturised telephone being suitable for being housed in the housing (12) of the smartphone (1).
